# EUROPÄISCHE PATENTSCHRIFT

(11) **EP 0 437 658 B1**
(45) Veröffentlichungstag und Bekanntmachung des Hinweises auf die Patenterteilung: **23.03.1994**
(21) Anmeldenummer: 90100929.0
(22) Anmeldetag: 17.01.1990
(51) Int. Cl.: H02H 5/04, G08B 26/00

(54) **Schutzeinrichtung für elektrische Maschinen**
Protection device for an electric machine
Dispositif de protection pour une machine électrique

(43) Veröffentlichungstag der Anmeldung: 24.07.1991
(73) Patentinhaber: SIEMENS AKTIENGESELLSCHAFT, 80333 München (DE)
(72) Erfinder: Fröhlich, Paul, Dipl.-Ing., D-8458 Sulzbach-Rosenberg (DE)

(56) Entgegenhaltungen:
- EP-A- 0 070 449
- DE-B- 1 663 122
- FR-A- 2 528 601
- US-A- 4 075 674
- US-A- 4 286 117

## Beschreibung

Die Erfindung bezieht sich auf eine Schutzeinrichtung für elektrische Maschinen mittels mehrerer anschaltbarer Temperaturfühlerkreise mit einem oder mehreren Temperaturfühlern zur Überwachung unzulässiger Maschinentemperaturen, bei der Widerstandswerte der Temperaturfühler in einer Auswerteschaltung ausgewertet und zu einer Auslösung und/oder Meldung führen.

Aus der EP 0 070 449 A1 ist ein Verfahren zum Betreiben einer Brandmeldeanlage bekannt. Bei diesem verfahren wird aus den einzelnen Meßwerten der Brandmelder ein mittlerer Meßwert gebildet und in einem Speicher abgelegt. Zusätzlich wird ein Differenzwert aus dem jeweils aktuellen Meßwert und dem gespeicherten mittleren Meßwert gebildet. Nach Maßgabe eines Vergleiches zwischen diesem Differenzwert und einem vorgebbaren Grenzwert wird eine Anzeigeeinrichtung angesteuert. Hierdurch sollen die Ansprechempfindlichkeit und die Resistenz gegenüber alters- oder betriebsbedingten Verschiebungen der Bauteiltoleranzen der Brandmeldeanlage gesteigert werden.

Demgegenüber liegt der Erfindung der Aufgabe zugrunde, ein bekanntes Thermistormotorschutzgerät für Kaltleitertemperaturfühler (Siemens Schaltgeräteliste NS2, 1989, Seite 5/28 - 5/30) dahingehend zu verbessern, daß werkseitig eingebaute Drahtbrücken, die bisher kundenseitig entfernt werden müssen, entbehrlich sind. Hierdurch soll das Problem beseitigt werden, daß, falls eine derartige Drahtbrücke nicht entfernt ist, der Fühlerkreis wirkungslos ist, ohne daß das Auslösegerät dies automatisch feststellt. Zusätzlich soll das Problem gelöst werden, daß bei einer geänderten Verwendung der bekannten Schutzeinrichtung nicht mehr benötigte Fühlerkreise erneut gebrückt werden müssen.

Dies wird auf einfache Weise dadurch erreicht, daß ein nicht flüchtiger Speicher zur Speicherung eines vorgegebenen Ist-Zustandes der Anzahl und Lage der anzuschaltenden Temperaturfühlerkreise und ein Analog-Digital-Wandler zur digitalen Umformung der abgefragten analogen Anschlußwiderstandswerte aller Temperaturfühlerkreise vorgesehen ist und daß zusätzlich eine Vergleichsschaltung zum Vergleichen der in einem bestimmten Bereich liegenden digitalen Anschlußwiderstandswerte mit dem Ist-Zustand aus dem Speicher vorhanden ist, die ein Signal bei Abweichung zur Auslösung und/oder Meldung abgibt und daß von ihr bei Anschalten weiterer Fühlerkreise diese bezüglich ihrer Anzahl und Lage als neuer Ist-Zustand in den nicht flüchtigen Speicher eingespei chert werden. Um Störungen bei der Aktivierung der Fühlerkreise zu vermeiden, ist es vorteilhaft, wenn mehrere Meß- und Vergleichszyklen vorgesehen sind. Mit nur einem Analog/Digital-Wandler kann ausgekommen werden, wenn ein Analog-Digital-Wandler zusammen mit einem Multiplexer zur Abfrage der analogen Anschlußwiderstandswerte nacheinander vorgesehen ist. Die aktuelle Fühlerkonfiguration kann auf einfache Weise angezeigt werden, wenn eine Abfrageeinrichtung für den Istzustand vorhanden ist. Hierzu kann die bei bekannten Schutzeinrichtungen vorhandene Test-Reset-Taste benutzt werden. Um die Grundkonfiguration auf einfache Weise wiederzuerstellen, ist es von Vorteil, wenn eine Einrichtung zur Rückführung in den vorgegebenen Anschaltzustand für die Temperaturfühlerkreise vorhanden ist. Hierzu kann eine Taste oder eine Klemme vorgesehen werden.

Anhand der Zeichnung wird ein Ausführungsbeispiel gemäß der Erfindung beschrieben.

Es zeigen:

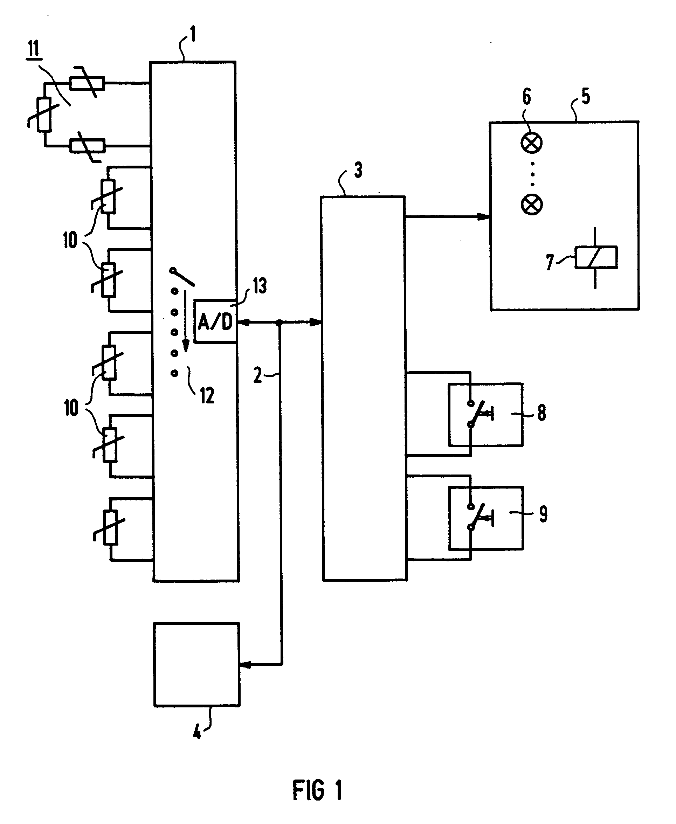

- FIG 1: ein Blockschaltbild zur automatischen Fühlerkreisaktivierung und
- FIG 2: das Flußdiagramm für den Ablauf der Vergleiche.

Das Blockschaltbild zeigt links das Einkoppeln der Eingangskreise über an Eingangsschaltung 1 sowie einen über eine Busleitung 2 verbundene Vergleichsschaltung 3, im Beispiel als Mikrocontroller ausgeführt, und einen nicht flüchtigen Speicher 4, beispielsweise ein E²-Speicher, der über die Busleitung 2 mit dem Mikrocontroller 3 und mit der Eingangsschaltung 1 verbunden ist. An den Mikrocontroller 3 ist ein Ausgabebaustein 5 zur Auslösung und/oder Meldung angeschlossen. Schematisch sind hier einzelne LED 6 angedeutet und ein Auslöserelais 7, die gemeinsam oder getrennt beaufschlagt werden können. Weiterhin ist eine Abfrageeinrichtung 8 für den Ist-Zustand vorhanden, die mit dem Mikrocontroller 3 in Verbindung steht. Sie kann aus der sogenannten Test-Reset-Taste üblicher Thermistor-Motorschutzgeräte bestehen. Eine Programmtaste 9, die ebenfalls mit dem Mikrocontroller 3 verbunden ist, dient zur Rückführung in den vorgegebenen Anschaltzustand für die Temperaturfühlerkreise 10, die mit der Eingangsschaltung verbunden sind. Die Temperaturfühlerkreise 10 können aus mehreren einzelnen Temperaturfühlern 11 bestehen, wie es im oberen Teil der Eingangsschaltung 1 verdeutlicht wurde. Die einzelnen Temperaturfühlerkreise 10 werden im Beispiel über einen Multiplexer 12 an einen AD-Wandler 13 angeschaltet, so daß der Zustand der einzelnen Temperaturfühlerkreise 10 dem Mikrocontroller 3 über den Bus 2 zugeführt werden kann.

Üblicherweise wird die Schutzeinrichtung werksseitig im Speicher 4 so programmiert, daß mindestens ein Temperaturfühlerkreis anzuschließen ist. Wird nun die Schutzeinrichtung an Spannung gelegt, so wird der Temperaturfühlerkreiszustand über den Multiplexer 12 und den AD-Wandler 13 dem Mikrocontroller 3 zugeführt. Für die in dem nicht flüchtigen Speicher 4 gespeicherte Anzahl und Lage der vorgegebenen, anzuschaltenden Temperaturfühlerkreise - das ist bei werksseitiger Lieferung der obere Fühlerkreis -, wird nun in dem Mikrocontroller 3 überprüft, ob der digitale korrekte Anschlußwiderstandswert vorhanden ist. Falls dies nicht der Fall ist, wird über den Ausgabebaustein 7 entweder eine Meldung und/oder eine Auslösung eingeleitet. Ist der Fehler beseitigt, kann über die Test-Reset-Taste die Einrichtung wieder zurückgestellt werden. Werden nun weitere Temperaturfühlerkreise angeschlossen, so wird diese Zustandsänderung vom Mikrocontroller 3 erkannt und in dem Speicher 4 abgelegt. Liegen auch diese Temperaturfühlerkreise in dem korrekten Anschlußwiderstandswertbereich, werden diese Fühler als aktive Meßfühler behandelt und, wie gesagt, im Speicher 4 abgelegt. Durch Betätigen der Programmtaste 9 kann jederzeit der werksseitige Lieferzustand des Speichers 4 wieder erreicht werden. Dies ist erforderlich, wenn das Gerät anderweitig eingesetzt wurde oder die Temperaturfühlerkreise geändert werden. Durch Betätigen der Test-Reset-Taste 8 ist während des Betriebs jederzeit am Ausgabebaustein die Anzahl und Lage der aktiven Temperaturfühlerkreise kontrollierbar. Hierzu sind die LED-Anzeigen 6 entsprechend angeordnet. Die Einrichtung zur Rückführung in den vorgebenen Anschaltzustand 9, als Programmtaste bezeichnet, wird nur aktiv bei unmittelbarer gleichzeitiger Einschaltung der Steuerspannung und Drücken der Programmtaste.

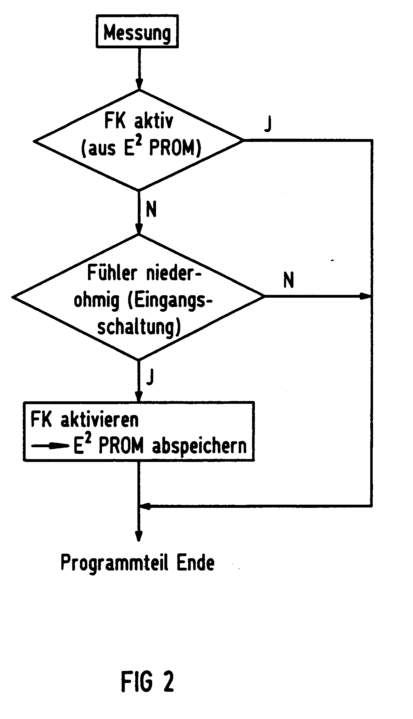

In der FIG 2 ist das Flußdiagramm, das zur Erstellung eines Programmes benutzt werden kann, dargestellt. Hiernach wird zunächst jeder Fühlerkreis gemessen und mit der in E²-PROM als aktiv gespeicherten Lage verglichen. Stimmt die Messung mit dem Speicher nicht überein, wird der Widerstandswert des Fühlers ermittelt, d.h. es wird festgestellt, ob hier ein wirksamer Fühler angeschlossen ist. Die Messung kann, je nach dem, ob Kalt- oder Heißleiter benutzt werden, einen nieder- oder hochohmigen Fühler voraussetzen. Wird hier ein intakter Fühler erkannt, so wird weiterhin der Fühlerkreis aktiviert und im E²-PROM abgespeichert, wonach der Programmteil zu Ende ist. Wird der Fühler als nicht aktiver Fühler erkannt, so ist die Antwort nein, so daß ebenfalls der Programmteil als erledigt zu betrachten ist. Wenn der erste Vergleich des aktiven Fühlerkreises mit der Lage aus dem E²-PROM zu bejahen ist, ist auch hier im Programm weiter nichts durchzuführen, so daß der Programmteil zu Ende ist. Vor Aktivierung bes E²-PROM's gemäß letztem Kästchen können mehrere Meß- und Vergleichsvorgänge durchgeführt werden, um eventuelle Störungen auszuschalten. Nach Beendigung der Programmteils nach FIG 2 kann das Programm mit weiteren Programmteilen fortgesetzt werden.

## Patentansprüche

1. Schutzeinrichtung für elektrische Maschinen mittels mehrerer anschaltbarer Temperaturfühlerkreise mit einem oder mehreren Temperaturfühlern (10) zur Überwachung unzulässiger Maschinentemperaturen, bei der Widerstandswerte der Temperaturfühler in einer Auswerteschaltung ausgewertet und zu einer Auslösung und/oder Meldung führen, **dadurch gekennzeichnet,** daß ein nicht flüchtiger Speicher (4) zur Speicherung eines vorgegebenen Ist-Zustandes der Anzahl und Lage der anzuschaltenden Temperaturfühlerkreise (10) und ein Analog-Digital-Wandler (13) zur digitalen Umformung der abgefragten analogen Anschlußwiderstandswerte aller Temperaturfühlerkreise (10) vorgesehen ist und daß zusätzlich eine Vergleichsschaltung (3) zum Vergleichen der in einem bestimmten Bereich liegenden digitalen Anschlußwiderstandswerte mit dem Ist-Zustand aus dem Speicher (4) vorhanden ist, die ein Signal bei Abweichung zur Auslösung (7) und/oder Meldung (6) abgibt und daß von ihr bei Anschalten weiterer Fühlerkreise (10) diese bezüglich ihrer Anzahl und Lage als neuer Ist-Zustand in den nicht flüchtigen Speicher (4) eingespeichert werden.

2. Schutzeinrichtung nach Anspruch 1, **dadurch gekennzeichnet,** daß mehrere Meß- und Vergleichszyklen vorgesehen sind.

3. Schutzeinrichtung nach Anspruch 1 oder 2, **dadurch gekennzeichnet,** daß ein Analog-Digital-Wandler (13) zusammen mit einem Multiplexer (12) zur Abfrage der analogen Anschlußwiderstandswerte nacheinander vorgesehen ist.

4. Schutzeinrichtung nach Anspruch 1, 2 oder 3, **dadurch gekennzeichnet,** daß eine Abfrageeinrichtung (8) für den Istzustand vorhanden ist.

5. Schutzeinrichtung nach einem der vorhergehenden Ansprüche, **dadurch gekennzeichnet,** daß eine Einrichtung (9) zur Rückführung in den vorgegebenen Anschaltzustand für die Temperaturfühlerkreise (10) vorhanden ist.

## Claims

1. Protective device for electrical machines, using several connectable temperature detector circuits having one or several temperature detectors (10) for monitoring unacceptable machine temperatures, in which resistance values of the temperature detectors are evaluated in an evaluation circuit and lead to tripping and/or to an alarm signal, characterised in that a non-volatile memory (4) is provided for storing a preset actual condition of the number and position of the temperature detector circuits (10) to be connected and an analogue-to-digital converter (13) is provided for the digital conversion of the scanned analogue connection resistance values of all of the temperature detector circuits (10), and in that, additionally, there is a comparison circuit (3) for comparing the digital connection resistance values within a predetermined range with the actual condition from the memory (4), which comparison circuit supplies a signal in the case of a deviation for tripping (7) and/or for an alarm signal (6), and in that, when further detector circuits (10) are connected, the number and position of these further detection circuits are stored as a new actual condition by the said comparison circuit in the non-volatile memory (4).

2. Protective device according to claim 1, characterised in that several measuring and comparison cycles are provided.

3. Protective device according to claim 1 or 2, characterised in that an analogue-to-digital converter (13) is provided together with a multiplexer (12) for scanning the analogue connection resistance values one after another.

4. Protective device according to claim 1, 2 or 3, characterised in that a scanning device (8) for the actual condition is present.

5. Protective device according to one of the preceding claims, characterised in that a device (9) for returning the temperature detector circuits (10) to the preset connection condition is present.

## Revendications

1. Dispositif de protéger des machines électriques au moyen de plusieurs circuits de détection de température pouvant être raccordés, et comportant un ou plusieurs capteurs de température (10) pour contrôler les températures inadmissibles des machines, et dans lequel des valeurs résistives des capteurs de température sont évaluées dans un circuit d'évaluation et conduisent à un déclenchement et/ou à une signalisation, caractérisé par le fait qu'il est prévu une mémoire non volatile (4) servant à mémoriser un état réel prédéterminé du nombre et de la position des circuits de détection de température (10) pouvant être raccordés, et un convertisseur analogique/numérique (13) servant à mettre sous forme numérique les valeurs résistives de raccordement analogiques interrogées de tous les circuits de détection de température (10) et qu'en outre il est prévu un circuit comparateur (3) servant à comparer les valeurs résistives numériques de raccordement, qui se situent dans une gamme déterminée, à l'état réel délivré par la mémoire (4), ce circuit délivrant, dans le cas d'un écart, un signal pour provoquer le déclenchement (7) et/ou la signalisation (6), et que lors du raccordement d'autres circuits de détection (10), le circuit comparateur mémorise le nombre et la position de ces circuits en tant que nouvel état réel dans la mémoire non volatile (4).

2. Dispositif de protection suivant la revendication 1, caractérisé par le fait qu'il est prévu plusieurs cycles de mesure et de comparaison.

3. Dispositif de protection suivant la revendication 1 ou 2, caractérisé par le fait qu'il est prévu un convertisseur analogique/numérique (13) ainsi qu'un multiplexeur (12) servant à interroger les valeurs résistives analogiques de raccordement, disposées réciproquement en série.

4. Dispositif de protection suivant la revendication 1, 2 ou 3, caractérisé par le fait qu'il est prévu un dispositif (8) d'interrogation de la valeur réelle.

5. Dispositif de protection suivant l'une des revendications précédentes, caractérisé par le fait qu'il est prévu un dispositif (9) de rétablissement des circuits de détection de température (10) dans l'état de raccordement prédéterminé.
